# EUROPEAN PATENT APPLICATION

(11) **EP 3 583 991 A1**
(43) Date of publication of application: **25.12.2019**
(21) Application number: 19181255.1
(22) Date of filing: 19.06.2019
(51) Int. Cl.: B01D 33/067, B01D 33/073

(54) **DRUM WASHER WITH GRAVITY ASSIST DRAINAGE**

(30) Priority: 20.06.2018 US 201862687381 P; 12.06.2019 US 201916438732
(71) Applicant: ANDRITZ INC., Glens Falls, NY 12801 (US)
(72) Inventor: RAWLS, Lindsay, Alpharetta, GA Georgia 30004 (US); GRACE, Todd S., Alpharetta, GA Georgia 30004 (US)
(74) Representative: Hoffmann Eitle

(57) **Abstract**

A rotary drum filter comprising one or more divider plates disposed between the drum's outer surface and grids disposed radially outward from the drum's outer surface. The divider plates are desirably diagonally disposed along the drum's outer surface and have at least one end disposed near a drainage hole. The divider plates and open sections under the grids between circumferentially adjacent grids permits filtrate to flow under the grids. The divider plates and open sections under the grids permit the filtrate to flow into the nearest drainage hole while increasing the run underneath the grids, thereby permitting more filtrate to exit through a limited number of drainage holes.

## Description

### BACKGROUND OF THE INVENTION

### 1. CROSS-RELATED APPLICATION

This application claims the benefit under 35 U.S.C. § 119 (e) of the earlier filing date of U.S. Provisional Patent Application No. 62/687,381 filed on June 20, 2018, the entirety of which are incorporated herein by reference.

### 2. TECHNICAL FIELD

The present disclosure relates generally to rotary drum washers used to dewater sludge or other suspensions in any industry and more particularly to recausticizing drums used in the chemical recovery processes in the pulp and paper industry, specifically for the recovery of lime mud or dregs.

### 3. RELATED ART

It is possible to produce pulp on an industrial scale in several ways. Producers tend to classify these methods into one of three general categories: chemical pulping, mechanical pulping, and hybrid pulping. Hybrid pulping involves different aspects of both chemical and mechanical pulping. Briefly, mechanical pulping often involves feeding lignocellulosic material (*e.g.* wood chips, bagasse, corn stover, recycled paper, or other material comprising the protein lignin and cellulosic polymers) through a series of mechanical refiners. Successive refining grinds the lignocellulosic material to the desired pulp grade. Mill operators may further process this pulp into a number of pulp-based products (*e.g.* paper, packaging material, absorbent filler, *etc*.); or the mill operators may sell the pulp wholesale.

In chemical processes, mill operators treat lignocellulosic material with either strong acids or strong bases to disassociate the lignin from the cellulosic fibers. Operators may then separate, wash, and further process the cellulosic fibers into pulp or other pulp-based products. Chemical process examples include: the Kraft process (also known as the "sulfate process"), sulfite process, soda pulping process, and the sulfite semi-chemical pulping process.

While the processing chemicals for each type of chemical process may vary, mill operators frequently recover and recycle these process chemicals to operate the mill economically. In the Kraft process for example, mill operators cook the lignocellulosic material with "white liquor" in large pressurized digesters. The white liquor comprises sodium hydroxide, NaOH, and sodium sulfide, Na₂S. After cooking, a slurry of spent chemical liquor and rough pulp, exits the digester. The spent chemical liquor is commonly known as "black liquor" and comprises organic and inorganic compounds left over from the cooking process.

While downstream pulping equipment continues to process the rough pulp, the chemical recovery process begins with isolating, concentrating, and then transferring the black liquor into a chemical recovery boiler. The chemical recovery boiler evaporates excess moisture and the inorganic compounds in the black liquor undergo pyrolysis. These inorganic compounds accumulate as molten salts ("smelt") at the bottom of the recovery boiler and eventually flow into an adjacent dissolving tank. The dissolving tank typically contains "weak wash" comprising the liquors used to wash lime mud and other precipitates. Upon contacting the weak wash, the smelt reacts and mixes with the weak wash to become "green liquor." The green liquor contains the first component of white liquor: sodium sulfide, Na₂S, and the byproduct sodium carbonate, Na₂CO₃.

Operators then clarify and feed the green liquor into an agitator and add calcium oxide, CaO, and water. Calcium oxide is commonly known as "quicklime." The quicklime exothermically reacts with the water to produce calcium hydroxide, Ca(OH)₂. The calcium hydroxide then reacts with the sodium carbonate in the green liquor to produce the other component of white liquor: sodium hydroxide, NaOH, and the byproduct calcium carbonate, CaCO₃. Calcium carbonate is commonly known as "lime mud."

At this stage, the lime mud precipitates out of the white liquor solution. Operators then clarify and transfer the white liquor to a storage tank to await reuse in the Kraft process. Meanwhile, operators wash, filter, and transfer the lime mud to a lime kiln for conversion back into quicklime (calcium oxide, CaO). With the recycled quicklime, the mill operators may continue to treat green liquor and recover white liquor cost effectively.

To wash and filter the lime mud prior to feeding the lime mud into the lime kiln, operators may process the lime mud on a rotary drum filter. These filters typically consist of a cylindrical drum that is partially submerged in a vat of lime mud. A fabric, plastic, or metal mesh covers the outer surface of the drum and serves as a filter medium. The drum rotates around a center drainage channel that connects to a vacuum system at one end of the drum. Air flowing through the drop leg creates a vacuum. Conduits connect drainage holes in the drum to the center drainage channel. The vacuum allows lime mud to accumulate on a submerged sector of the drum. As the drum sector rotates out of the vat, filtrate flows through the filter medium, drainage holes, conduits, center drainage channel, and vacuum system. Before the sector rotates back down into the vat, a doctor blade shears off the dewatered lime mud. Operators then collect this dewatered lime mud and may store it before feeding it into a lime kiln.

The rate at which filtrate exits the sector can be limited by the rate of rotation and the number of drainage holes in each sector. With current rotary drum filter designs, there is a point at which increasing the rate of rotation will not further increase filtration. To compensate, one might think to add more drainage holes, but adding more drainage holes presents its own problems. Adding too many drainage holes reduces the pressure differential between the drum and lime mud, thereby decreasing the drum's ability to develop an initial mud layer. This initial mud layer acts as a primary filter medium and allows additional mud to accumulate on top of the initial layer. Furthermore, existing rotary filter drums may have structural components at locations desirable for an additional drainage hole. Increasing the number of drainage holes may also weaken the structural integrity of the rotary filter drum. Accordingly, there is a long felt and unresolved need to increase the rate of filtration without weakening the structural integrity of the rotary filter drum.

### SUMMARY OF THE INVENTION

The problem of unrealized production in rotary filter drums due to undirected filtrate flow through the sectors is mitigated by a rotary drum filter comprising: a drum shell having areas defining a plurality of drainage holes, and a divider plate disposed on an outer surface of the drum shell and extending longitudinally and laterally along the drum shell, wherein the divider plate has a first end and a second end, and wherein the first end is disposed near a drainage hole and is thereby configured to direct a filtrate into the drainage hole.

An exemplary rotary drum filter may further comprise grid holders having multiple slots disposed along the length of the grid holders, wherein the grid holders extend longitudinally on an outer surface of a drum shell at arcuate intervals to define multiple arcuate drainage sectors. Divider plates may be disposed between the drainage sectors.

In still other exemplary embodiments, a divider plate may extend from one or more grids disposed around the drum shell.

In another exemplary embodiment, the problem of unrealized production in rotary filter drums due to undirected filtrate flow through the sectors is mitigated by a rotary drum filter comprising: a drum shell having areas defining a plurality of drainage holes, grid holders having multiple slots disposed along the length of the grid holders, wherein the grid holders extend longitudinally on an outer surface of a drum shell at arcuate intervals to define multiple arcuate drainage sectors including a first arcuate drainage sector and a second arcuate drainage sector disposed adjacent to the first arcuate drainage sector, wherein each of the arcuate drainage sectors have a first longitudinal end distally disposed from a second longitudinal end, wherein the first arcuate drainage sector and the second arcuate drainage sector have drainage holes disposed at a first lateral end and at a second lateral end distally disposed from the first lateral end, and divider plates disposed on the outer surface of the drum shell, the divider plates extending longitudinally and laterally within the first arcuate drainage sector and the second arcuate drainage sector, wherein an end of the drainage plate is disposed toward a grid holder, the grid holder being disposed between the first arcuate drainage sector and the second arcuate drainage sector.

An advantage of exemplary embodiments of the present disclosure is that suppliers may retrofit existing rotary filter drums with exemplary slotted grid holders and divider plates.

### BRIEF DESCRIPTION OF THE DRAWINGS

The foregoing will be apparent from the following more particular description of exemplary embodiments of the disclosure, as illustrated in the accompanying drawings. The drawings are not necessarily to scale, with emphasis instead being placed upon illustrating the disclosed embodiments.
**FIG. 1A** is a perspective view of a schematic representation of an exemplary rotary drum filter having diagonal divider plates.
**FIG. 1B** is perspective cross-sectional view of an alternative construction of an exemplary rotary drum filter having diagonal divider plates.
**FIG. 2** is a side view of a schematic representation of an exemplary rotary drum filter having at least two divider plates in each drainage sector. This side view shows the length of the exemplary rotary drum filter.
**FIG. 3** is a side view representation of an exemplary rotary drum filter having at least three divider plates in each drainage sector. This side view shows the length of the exemplary rotary drum filter.
**FIG. 4A** is a representation of a width side of an exemplary rotary drum filter.
**FIG. 4B** is a detailed side view of the apex of **FIG. 4A****.**

### DETAILED DESCRIPTION OF THE INVENTION

The following detailed description of the preferred embodiments is presented only for illustrative and descriptive purposes and is not intended to be exhaustive or to limit the scope and spirit of the invention. The embodiments were selected and described to best explain the principles of the invention and its practical application. One of ordinary skill in the art will recognize that many variations can be made to the invention disclosed in this specification without departing from the scope and spirit of the invention.

Similar reference characters (e.g. **140, 240, 340, 440**) indicate corresponding parts throughout the several views unless otherwise stated. Although the drawings represent embodiments of various features and components according to the present disclosure, the drawings are not necessarily to scale and certain features may be exaggerated in order to better illustrate embodiments of the present disclosure, and such exemplifications are not to be construed as limiting the scope of the present disclosure.

Except as otherwise expressly stated herein, the following rules of interpretation apply to this specification: (a) all words used herein shall be construed to be of such gender or number (singular or plural) as to circumstances require; (b) the singular terms "a," "an," and "the," as used in the specification and the appended claims include plural references unless the context clearly dictates otherwise; (c) the antecedent term "about" applied to a recited range or value denotes an approximation within the deviation in the range or values known or expected in the art from the measurements; (d) the words "herein," "hereby," "hereto," "hereinbefore," and "hereinafter," and words of similar import, refer to this specification in its entirety and not to any particular paragraph, claim, or other subdivision, unless otherwise specified; (e) descriptive headings are for convenience only and shall not control or affect the meaning or construction of any part of the specification; and (f) "or" and "any" are not exclusive and "include" and "including" are not limiting. Further, the terms, "comprising," "having," "including," and "containing" are to be construed as open-ended terms (*i.e.,* meaning "including but not limited to").

References in the specification to "one embodiment," "an embodiment," "an exemplary embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

To the extent necessary to provide descriptive support, the subject matter and/or text of the appended claims is incorporated herein by reference in their entirety.

Recitation of ranges of values herein are merely intended to serve as a shorthand method of referring individually to each separate value falling within the range of within any sub ranges there between, unless otherwise clearly indicated herein. Each separate value within a recited range is incorporated into the specification or claims as if each separate value were individually recited herein. Where a specific range of values is provided, it is understood that each intervening value, to the tenth or less of the unit of the lower limit between the upper and lower limit of that range and any other stated or intervening value in that stated range or sub range hereof, is included herein unless the context clearly dictates otherwise. All subranges are also included. The upper and lower limits of these smaller ranges are also included therein, subject to any specifically and expressly excluded limit in the stated range.

It should be noted that some of the terms used herein are relative terms. For example, the terms "upper" and "lower" are relative to each other in location, *i.e.* an upper component is located at a higher elevation than a lower component in a given orientation, but these terms can change if the device is flipped. The terms "inlet' and "outlet" are relative to a fluid flowing through them with respect to a given structure, *e.g.* a fluid flows through the inlet into the structure and flows through the outlet out of the structure. The terms "upstream" and "downstream" are relative to the direction in which a fluid flows through various components, *i.e.* the flow of fluids through an upstream component prior to flowing through the downstream component.

The terms "horizontal" and "vertical" are used to indicate direction relative to an absolute reference, *i.e.* ground level. However, these terms should not be construed to require structure to be absolutely parallel or absolutely perpendicular to each other. For example, a first vertical structure and a second vertical structure are not necessarily parallel to each other. The terms "top" and "bottom" or "base" are used to refer to locations/surfaces where the top is always higher than the bottom/base relative to an absolute reference, *i.e.* the surface of the Earth. The terms "upwards" and "downwards" are also relative to an absolute reference; an upwards flow is always against the gravity of the Earth.

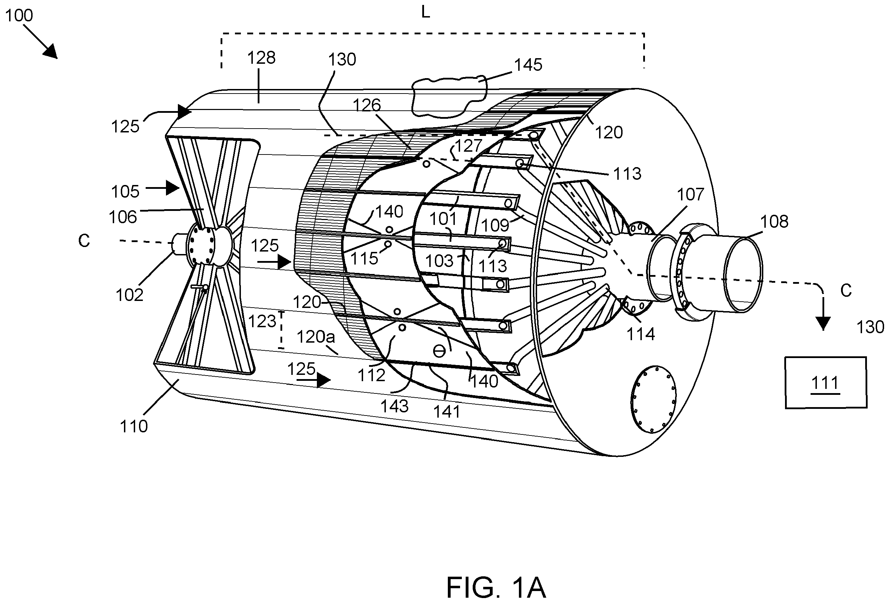

Rotary drum filters **100** are used in several industries and for several applications. For example, in the pulp and paper industry, rotary drum filers can be used to filter lime mud, in brown stock washing, and in pulp bleaching. Rotary drum filters **100** are also used in other industries that require large-scale separation of solids from liquids, for example in the mining industry. **FIG. 1A** is a schematic perspective representation of an exemplary rotary drum filter **100** comprising a drum shell **110** having areas defining a plurality of drainage holes **115.** The rotary drum filter **100** comprises a rotary support structure **105** that may comprise beams **106** and / or support discs **103** extending radially around a center of rotation **C.** A journal **102** or a central drainage channel **107** may surround the center of rotation **C.** The support structure **105** may further comprise drainage conduits **109** that fluidly communicate with the drainage holes **115** and the central drainage channel **107.** It will be understood that in other exemplary rotary drum filters **100,** the drainage conduits **109** may not be structural. In certain exemplary embodiments, a trough **101** may be disposed under a row of drainage holes **115** and one or more drainage conduits **109.** In these embodiments, the trough **101** permits filtrate **130** to flow from the row of drainage holes **115** to the drainage conduit **109** via an outer drainage conduit hole **113.** An end **108** of the central drainage channel **107** fluidly communicates with a vacuum system **111,** which typically comprises a vacuum tank and a pump. The vacuum system **111** creates a vacuum that facilitates the extraction of filtrate **130** from the suspension **145.** The suspension may be lime mud, dregs, pulp, sludge, a mineral slurry, or other suspension of solids and liquids that can be separated with a rotary drum filter **100.**

In the depicted embodiment, grid holders **120** extend longitudinally on an outer surface **112** of the drum shell **110** and are disposed at arcuate intervals **123** to define multiple arcuate drainage sectors **125.** The grid holders **120** may be welded or otherwise affixed to the outer surface **112** of the drum shell **110.** In the depicted exemplary embodiment, each grid holder **120** has a number of slots **127** disposed along a length **L** of each grid holder **120.** In other exemplary embodiments, the grid holders **120** may be disposed slightly above the outer surface **112** of the drum shell **110** to permit filtrate **130** to flow underneath the grid holder **120.** In such embodiments where the grid holder **120** is disposed above the drum **110,** the grid holders may lack the slots **127.**

Grid segments **126** are disposed between two adjacent grid holders **120** and over a divider plate **140.** A filter medium **128,** which may be a fabric, plastic, or wire mesh screen, is disposed over the grid segments **126** around the rotary drum filter **100.**

A divider plate **140** is disposed on the outer surface **112** of the drum shell **110** and extends longitudinally and laterally within the arcuate drainage sector **125.** The divider plate **140** may cut from a flat sheet of plate and then rolled and formed to conform to the curve of the outer drum surface **112.** The divider plate **140** comprises a first end **141** and a second end **143.** In the depicted embodiment, both the first end **141** and the second end **143** are disposed near separate drainage holes **115.** The divider plate **140** is disposed at an angle **θ** relative to the adjacent grid holder **120a.** In other exemplary embodiments, a divider plate **140** may extend along two or more adjacent drainage sectors **125.**

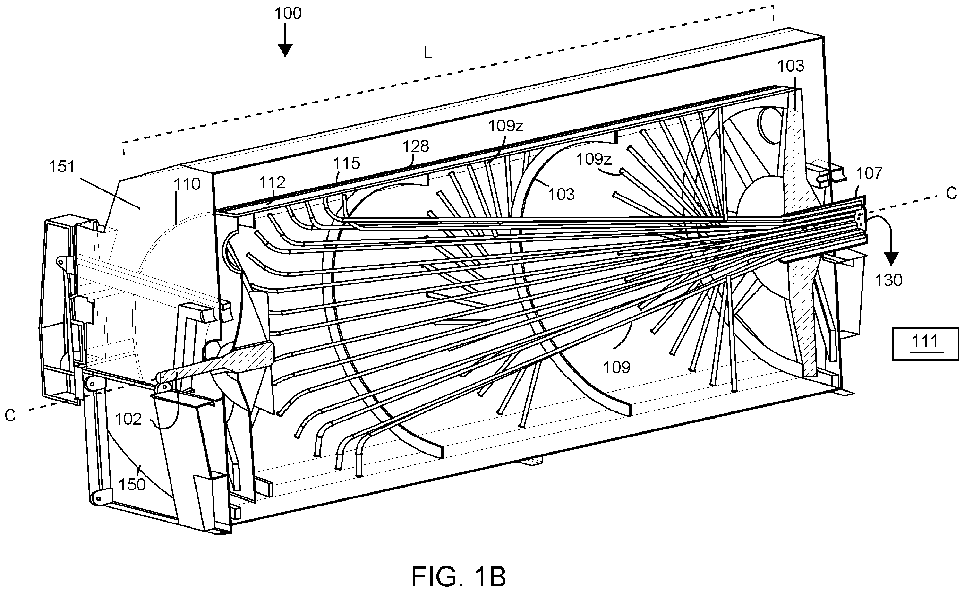

**FIG. 1B** is a cross-sectional perspective view of an alternative rotary drum filter **100** design. This view shows the drum shell **110** disposed within a vat **150** and housing **151.** The drainage conduits **109** extend generally further along the length **L** of the drum **110** than the embodiment of **FIG. 1A****.** The drainage conduits **109** and brachial conduits **109z** extending form the drainage conduits may fluidly communicate directly with the drainage holes **115** and thereby avoid the use of troughs **101** as shown in **FIG. 1A****.** Although not depicted in **FIG. 1B****,** the shown alternative rotary drum filter has divider plates **140** having a first end **141** and a second end **143** extending laterally and longitudinally along the outer surface **112** of the drum shell **110** in a manner similar to the manner depicted in **FIG. 1A****.** The first end **141** is preferably disposed near a first drainage hole **115** and the second end **143** is preferably disposed near a second drainage hole **115** located longitudinally and laterally distal from the first drainage hole **115.**

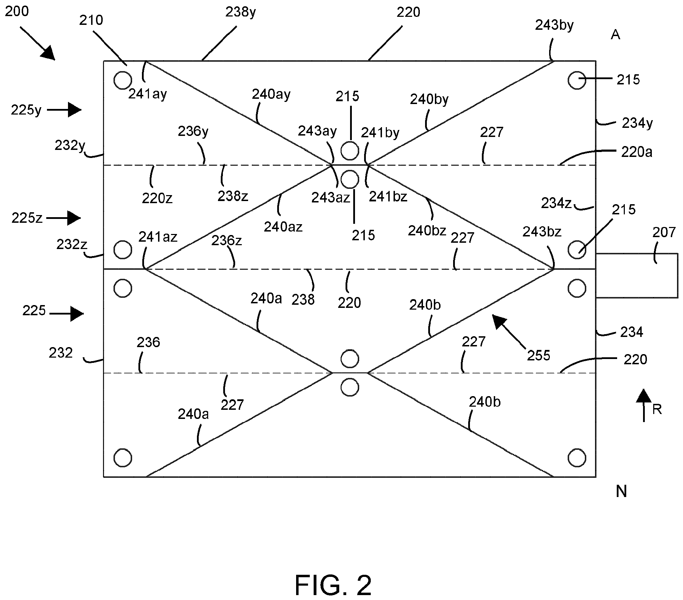

**FIG. 2** is a side view of a schematic representation of an exemplary rotary drum filter **200** comprising at least two divider plates **240a, 240b** in each drainage sector **225.** Each of the drainage sectors **225** have a first longitudinal end **232** distally disposed from a second longitudinal end **234** and a first lateral end **236** distally disposed from a second lateral end **238.** There are multiple drainage sectors **225** adjacently disposed to other drainage sectors **225.** To elucidate the principle of this disclosure, Applicant describes the drainage plates **240** and slots **227** in the grid holders **220** with particular reference to the first drainage sector **225z** and the second drainage sector **224y.**

As **FIG. 2** illustrates, the first drainage sector **225z** is disposed adjacent to a second drainage sector **225y.** On the first drainage sector **225z,** the first end **241az** of a first divider plate **240az** is disposed closer to the first drainage sector's first lateral end **236z** and first longitudinal end **232z.** Compared to the first divider plate's first end **241az,** the second end **243az** of the first divider plate **240az** is disposed closer to the first drainage sector's second lateral end **238z** and second longitudinal end **234z.**

On the second drainage sector **225y,** the first end **241ay** of a first divider plate **240ay** is disposed closer to the second drainage sector's second lateral end **238y** and first longitudinal end **232y.** Compared to the divider plate's first end **241ay,** the second end **243ay** of the first divider plate **240ay** is disposed closer to the second drainage sector's first lateral end **236y** and the second longitudinal end **234y.** In this manner, as the eye moves left to right, the first divider plates **240az, 240by** appear to converge toward a middle grid holder **220z** disposed between the first drainage sector **225z** and the second drainage sector **225y** and may be described as "converging divider plates."

In the depicted embodiment, the first end **241bz** of a second divider plate **240bz** in the first drainage sector **225z** is disposed closer to the first drainage sector's second lateral end **238z** and first longitudinal end **232z.** Compared to the second divider plate's first end **241bz,** the second end **243bz** of the second divider plate **240bz** is disposed closer to the first drainage sector's first lateral end **236z** and second longitudinal end **234z.**

The first end **241by** of a second divider plate **240bz** in the second drainage sector **225y** is disposed closer to the second drainage sector's first lateral end **236y** and first longitudinal end **232y.** Compared to the second divider plate in the second drainage sector's first end **241by,** the second end **243by** of the second divider plate **240by** is disposed closer to the second drainage sector's second lateral end **238y** and second longitudinal end **234y.** In this manner, as the eye moves left to right, the second divider plates **240bz, 240by** appear to diverge away from a middle grid holder **220z** disposed between the first drainage sector **225z** and the second drainage sector **225y** and may be described as "diverging divider plates."

It will be understood that a particular drainage sector **225** may have both converging and diverging divider plates and that "convergence" and "divergence" will change depending upon which grid holder **220** serves as the middle grid holder **220z** for a particular set of adjacent drainage sectors (see **225, 225z, 225y**). In the depicted embodiment, the drum shell **210** defines a drainage hole **215** near each end of the divider plates **240.**

In the depicted embodiment, the converging and diverging divider plates **240** create a hexagonal shape **255** between adjacent drainage sectors **225, 225z.** It will be understood that in other exemplary embodiments, the converging and diverging divider plates **240** among adjacent drainage sectors **225** may create shapes that are generally ovoid, circular, rhombic, oblong, octagonal, or other polygonal shape configured to direct filtrate **230** to a drainage hole **215** oriented closer to the nadir **N** of rotation. As such, although the straight diagonally oriented divider plates **240** are considered to be the most useful embodiment, it will be understood that this disclosure also covers divider plates **440** that are generally concave, convex, curved, segmented, and comprised of smaller straight elements, but generally curved overall.

It will be further understood that the configuration of drainage holes **215** shown in **FIG. 2** is an example of how drainage holes **215** may be arranged on an example drum shell **210.** In other exemplary embodiments, a drainage hole **215** or the drainage holes **215** may be disposed between adjacent drainage sections **225z, 225y** (*e.g.* under a grid holder **220**). In embodiments lacking grid holders **220,** a drainage hole may be disposed between adjacent drainage sections (see **225z** and **225y**).

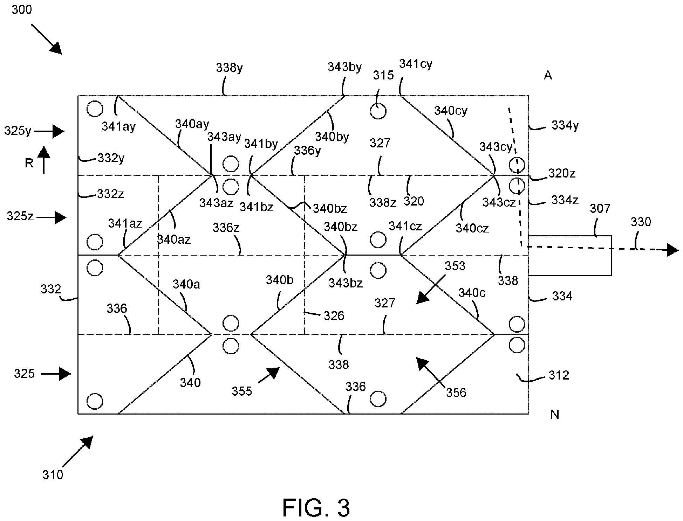

**FIG. 3** shows another exemplary embodiment in which the drainage sectors **325** comprise at least three drainage plates **340.** It will be understood that in other exemplary embodiments, the number of drainage plates **340** in a drainage sector **325** may be more than three.

The exemplary rotary drum filter **300** comprises drainage sectors **325** and divider plates **340** as discussed with reference to **FIG. 2****.** The first drainage sector **325z** and the second drainage sector **325y** each further comprise a third divider plate **340c.** On the first drainage sector **325z,** the first end **341cz** of the third divider plate **340cz** is disposed closer to the first drainage sector's first lateral end **336z** and first longitudinal end **332z** compared to the third divider plate's second end **343cz.** Likewise, compared to the third divider plate's first end **341cz,** the second end **343cz** of the third divider plate **340cz** is disposed closer to the first drainage sector's second lateral end **338z** and second longitudinal end **334z.**

On the second drainage sector **325y,** the first end **341cy** of a third divider plate **340cy** is disposed closer to the second drainage sector's second lateral end **338y** and first longitudinal end **332y** compared to the third divider plate's second end **343cy.** Likewise, compared to the third divider plate of the second drainage sector's first end **341cy,** the second end **343cy** of the third divider plate **340cy** is disposed closer to the second drainage sector's first lateral end **336y** and the second longitudinal end **334y.** As in **FIG. 2****,** the converging and diverging divider plates **340** define a series of hexagonal shapes **355** among the drainage sectors **325.** In the depicted exemplary embodiment, the grid holder **320** bisects at least one hexagonal shape **355** to define a "first section" **356** and a "second section" **353.** The first section **356** is be disposed closer to the nadir N of rotation while a given drainage sector **325** ascends towards the apex **A** of rotation. After a point on a given drainage sector **325** passes the apex **A** of rotation, the second section **353** of the hexagonal shape **355** will be oriented closer to the nadir **N** of rotation than the first section **356.** Upon passing the nadir **N,** the first section **356** will again be disposed closer to the nadir **N** than the second section **353,** thereby starting a new cycle. It will be understood that whichever of the first or second sections **356, 353** is disposed closer to the nadir **N** at any given point of rotation will be referred to as the "lower section" relative to the other section. Likewise, whichever of the first or second sections **356, 353** is disposed closer to the apex **A** at any given point of rotation will be referred to as the "upper section" relative to the other section. It will be further understood that in other exemplary embodiments a given grid holder **320** may not bisect the shape formed by the divider plates **325** and that the first section **356** and second section **353** may not be equal in area.

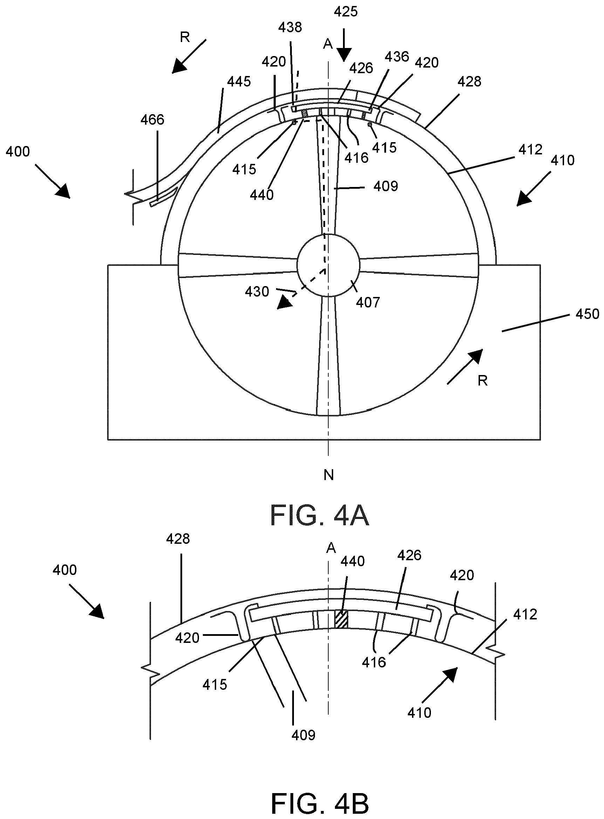

As can be visualized with reference to **FIGs. 3** and **4A****,** the first section **356** of the hexagonal shape **355** directs filtrate **330** to the drainage sector's first lateral end **336** on the ascent. The slots **327** along the grid holders **320** permit the filtrate **330** to flow downwardly along the drum's outer surface **312** and into the adjacent drainage sector **325z** wherein the first section **356** collects the downwardly flowing filtrate **330** at a drainage hole **315** near the first lateral end **336** of the adjacent drainage sector **325z.** The adjacent sets of diverging and converging divider plates **340** direct the filtrate to a drainage hole **315** disposed near the first lateral end **336** of the drainage sector **325.**

After the drainage sector **325** rotates past the apex, the filtrate **330** begins to flow downwardly toward the second lateral end **338** of the drainage sector **325.** The second section **353** of the hexagonal shape **355** on the ascent now become closer to the nadir **N** on the descent. The second section **353** thereby directs the filtrate **330** to drainage holes **315** disposed near the second lateral end **338** of the drainage sector **325.** Filtrate **330** may reverse course and flow back through the slots **327** in the grid holder **320** before encountering the second section **353** of the hexagonal shape **355** in a downwardly adjacent drainage sector **325z.**

Without being bound by theory, Applicant believes that the combination of divider plates **340** configured to direct filtrate **330** to drainage holes **315** disposed near a lateral end **336, 338** of a drainage sector **325** while further comprising adjacent drainage sectors (see **325z, 325y**) that are configured to fluidly communicate with each other (*e.g.* through slots **327** or the absence of an obstructions between the lateral sides **336, 338** of adjacent drainage sectors (see **325z, 325y**)) effectively increases the available drainage area for the filtrate while maintaining the structural integrity of the outer drum assembly. This, and the arrangement of the divider plates **340,** can allow operators to effectively increase the drainage capacity of rotary drum filters **300** that are approaching or that are at their maximum effective rotational velocity (*i.e.* the velocity at which increased rotation will not result in increased filtration). It is contemplated that the divider plates **340** may be fabricated from steel, such as 304 stainless steel, 316 stainless steel, carbon steel, titanium, or other materials having the structural rigidity and durability to support the outer drum assembly while withstanding the caustic nature of the filtrate. For example, in lime mud rotary drum filters, the filtrate may comprise residual sodium hydroxide (NaOH), a highly caustic compound. By way of another example, it is contemplated that manufacturers will typically select titanium divider plates **340** for rotary drum filters used in the pulp bleaching process.

**FIG. 4A** is a side view along a width of a rotary drum filter **400.** Only one drainage sector **425** is depicted for ease of reference. In this embodiment, the drum shell **410** rotates in direction **R** around an axis of rotation **C.** Drainage conduits **409** extend radially outward from the center drainage channel **407** and fluidly communicate with drainage holes **415** (*e.g.* through a trough see **101,** **FIG. 1A**). **FIG. 4A** better illustrates a grid **426** disposed on the outer surface **412** of the drum shell **410** between adjacent grid holders **420.** Grid legs **416** support the grid **426.** The filter medium **428** surrounds the outer surface **412** and the grid holders **420,** grids **426,** and divider plates **440** disposed on the outer surface **412.** Collectively, these components may be known as the outer drum assembly.

In operation, the rotary drum filter **410** may rotate in direction **R.** As a drainage sector **425** exits the suspension vat **450,** the suspension **445** adheres to the filter medium **428** and rotates toward the apex **A** of rotation. In the figure, the suspension **445** is depicted at about the 1:00 position to avoid too many intersecting lines, but it will be understood that the suspension begins adhering to the filter medium **428** below the 3:00 position. The references to "1:00" and "3:00" refer to the hours on an analog clock face and are used herein to reference a position on the circle. On the ascent, the vacuum system (see **311**) and gravity pull filtrate **430** through the filter medium **428** and into a drainage sector **425.** Before the drainage sector **425** rotates back into the vat **450,** a doctor blade **466** shears off the "dewatered" solids (see **445**) that remain after filtration. When the solids are lime mud, operators may then feed this lime mud to a lime kiln.

**FIG. 4B** is a detailed side view of the apex **A** of a rotary filter drum **400** similar to that of **FIG. 4A****.** The line of intersection is disposed further down the length of the drum in **FIG. 4B****.** As such, the divider plate **440,which** is disposed longitudinally and laterally on the drum surface **412** appears to be in a different location from the divider plate **440** depicted in **FIG. 4A****.** Both of these figures depict the divider plate **440** disposed under the grid **426** and between the grid legs **416.** By placing the divider plates **440** under the grid **426** and by having the divider plates **440** extend across the area that the grid **426** covers, the divider plate **440** further supports the grid **426** and can transfer forces from the slotted grid holders **420.** As a result of placing the divider plates **440** under the grid **426,** it is contemplated that servicers can retrofit the drum surface **412** of existing rotary drum filters **400** without redesigning the entire drum shell **410.** Servicers may have to break off some existing grid legs **416** to allow the divider plate **440** to extend laterally and longitudinally on the drum surface **412.**

In other exemplary embodiments, the divider plates **440** may all be oriented in the same direction such that the filtrate may flow (for example) from left to right and downwardly along the outer surface of the rotary drum filter toward a drainage hole. In certain exemplary embodiments, the angle **θ** may be 90 degrees. By way of example, the angle **θ** may have a range between about 25 degrees and 90 degrees.

In other exemplary embodiments, the grid holders **120, 220, 320, 420** may be omitted. In such embodiments, the grids **126, 226, 326, 426** are configured to engage the divider plates **140, 240, 340, 440.** Fasteners secure the grids **126, 226, 326, 426** to the divider plates **140, 240, 340, 440.** In other exemplary configurations, the divider plates **140, 240, 340, 440** are an integral part of the grid **126, 226, 326, 426.** The grids **126, 226, 326, 426** themselves may be made of any material sufficiently durable to withstand the environment within the vat housing **151** for prolonged periods. However, the grids are typically plastic and are made through an injection molding process. An exemplary grid injection mold will have a negative space capable of being filled with liquid plastic to define a divider plate **126, 226, 326, 426.** When an exemplary grid is disposed on the drum shell **110, 210, 310, 410** the divider plate **126, 226, 326, 426** extends from the bottom of the grid **126, 226, 326, 426.**

The lack of grid holders **120, 220, 320, 420** may be advantageous because the lack of grid holders **120, 220, 320, 420** would obviate the need for slots **127** and thereby increase the area through which filtrate **440** may flow from the second section **(353)** of the of the hexagonal shape **355** of an ascending section of the drum shell **410** to the first section **(356)** of the hexagonal shape **355.** The orientation of the divider plates **440** further directs the filtrate **440** to the drainage hole **415** disposed at the first lateral section **436** of the sector **425.** In this manner, the exemplary embodiments described herein use gravity, open spaces between adjacent drum sectors (see **325z** and **325y**) and divider plates **126, 226, 326, 426** extending longitudinally and laterally across the drum's outer surface **112** and leading to drainage holes **115, 215, 315, 415** to increase the rate of filtration over conventional rotary drum filters.

An exemplary embodiment rotary drum filter in accordance with this disclosure comprises: a drum shell having areas defining a plurality of drainage holes, a divider plate disposed on an outer surface of the drum shell and extending longitudinally and laterally along the drum shell, wherein the divider plate comprises a first end and a second end, and wherein the first end is disposed near a drainage hole.

Such an exemplary embodiment may further comprise a rotary support structure disposed around a center axis of rotation and a central drainage channel, wherein an end of the central drainage channel fluidly communicates with a vacuum system, drainage conduits fluidly communicating with the drainage holes and the central drainage channel, a grid disposed between two adjacent grid holders and over the divider plate, and a filter medium disposed around the rotary filter drum. In certain exemplary embodiments, the first ends of two or more of the multiple divider plates are adjacently disposed to separate drainage holes.

The exemplary embodiment may further comprise grid holders extending longitudinally on an outer surface of the drum shell and disposed at arcuate intervals to define multiple arcuate drainage sectors disposed around the drum shell, wherein a grid holder of the multiple grid holders comprise multiple slots disposed along a length of the grid holder. In certain exemplary embodiments, the rotary drum filter may further comprise grids disposed around the outer surface of the drum, wherein the divider plate engages a bottom of the grid disposed around the outer surface of the drum. In still other exemplary embodiments, the divider plate extends from a bottom of the grid disposed around the outer surface of the drum.

Another exemplary rotary drum filter comprises: a drum shell having areas defining a plurality of drainage holes, grid holders, wherein the grid holders extend longitudinally on an outer surface of a drum shell at arcuate intervals to define multiple arcuate drainage sectors including: a first drainage sector, and a second drainage sector disposed adjacent to the first drainage sector, wherein each of the drainage sectors have: a first longitudinal end distally disposed from a second longitudinal end, and a first lateral end distally disposed from a second lateral end, wherein the first drainage sector and the second drainage sector have drainage holes disposed near the first lateral end and the second lateral end, and divider plates disposed on the outer surface of the drum shell and extending longitudinally and laterally within the first drainage sector and the second drainage sector, wherein an end of the drainage plates in the first drainage sector and the second drainage sector converges toward a middle grid holder disposed between the first drainage sector and the second drainage sector.

In such an exemplary embodiment, the first drainage sector may further comprise at least two divider plates and the second drainage sector may further comprise at least two divider plates, wherein a second divider plate of the at least two divider plates in each drainage sector is longitudinally distally disposed from a first divider plate in each drainage sector, wherein a first end of the first divider plate in the first drainage sector is disposed closer to the first lateral end and the first longitudinal end of the first drainage sector and a second end of the first divider plate in the first drainage sector is disposed closer to the second lateral end and the second longitudinal end of the first drainage sector, wherein a first end of the first divider plate in the second drainage sector is disposed closer to the second lateral end and the first longitudinal end of the second drainage sector and a second end of the first divider plate in the second drainage sector is disposed closer to the first lateral end and the second longitudinal end of the second drainage sector, whereby the first divider plates in the first drainage sector and the second drainage sector define converging divider plates, wherein a first end of the second divider plate in the first drainage sector is disposed closer to the second lateral end and the first longitudinal end of the first drainage sector and a second end of the second divider plate in the first drainage sector is disposed closer to the first lateral end and the second longitudinal end of the first drainage sector, wherein a first end of the second divider plate in the second drainage sector is disposed closer to the first lateral end and the first longitudinal end of the second drainage sector and a second end of the second divider plate in the second drainage sector is disposed closer to the second lateral end and the second longitudinal end of the second drainage sector, whereby the second divider plates in the first drainage sector and the second drainage sector define diverging divider plates.

Such an exemplary rotary drum filter may further comprise at least three divider plates in each of the first drainage sector and the second drainage sector, wherein a third divider plate of the at least three divider plates in each drainage sector is longitudinally distally disposed from the first divider plate and the second divider plate in each drainage sector, wherein a first end of the third divider plate in the first drainage sector is disposed closer to the first lateral end and the first longitudinal end of the first drainage sector and a second end of the third divider plate in the first drainage sector is disposed closer to the second lateral end and the second longitudinal end of the first drainage sector, wherein a first end of the third divider plate in the second drainage sector is disposed closer to the second lateral end and the first longitudinal end of the second drainage sector and a second end of the third divider plate in the second drainage sector is disposed closer to the first lateral end and the second longitudinal end of the second drainage sector, whereby the third divider plates in the first drainage sector and the second drainage sector define converging divider plates.

Yet another exemplary rotary filter drum comprises: a drum shell having areas defining a plurality of drainage holes, divider plates disposed on an outer surface of the drum shell and extending longitudinally and laterally along the drum shell along an upper section of an ascending drainage sector of the drum shell to a lower section of the ascending drainage sector of the drum shell, wherein the divider plate comprises a first end and a second end, and wherein the first end is disposed near a drainage hole and the second end is disposed near a drainage hole.

While the invention has been described in connection with what is presently considered the most practical and preferred embodiment, it is to be understood that the invention is not to be limited to the disclosed embodiment, but on the contrary, is intended to cover various modifications and equivalent arrangements included within the spirit and scope of the invention.

## Claims

1. A rotary drum filter comprising:
a drum shell having areas defining a plurality of drainage holes;
a divider plate disposed on an outer surface of the drum shell and extending longitudinally and laterally along the drum shell, wherein the divider plate comprises a first end and a second end, and wherein the first end is disposed near a drainage hole.

2. The rotary filter drum of claim 1 further comprising a rotary support structure disposed around a center axis of rotation and a central drainage channel, wherein an end of the central drainage channel fluidly communicates with a vacuum system, drainage conduits fluidly communicating with the drainage holes and the central drainage channel, a grid disposed between two adjacent grid holders and over the divider plate, and a filter medium disposed around the rotary filter drum.

3. The rotary drum filter of claim 1 further comprising multiple divider plates affixed to the outer surface of the drum shell and extending longitudinally and laterally within the drainage sector of the multiple arcuate drainage sectors.

4. The rotary drum filter of claim 3, wherein the first ends of two or more of the multiple divider plates are adjacently disposed to separate drainage holes.

5. The rotary drum filter of claim 1, further comprising grid holders extending longitudinally on an outer surface of the drum shell and disposed at arcuate intervals to define multiple arcuate drainage sectors disposed around the drum shell, wherein a grid holder of the multiple grid holders comprise multiple slots disposed along a length of the grid holder.

6. The rotary filter drum of claim 5, wherein the divider plate is disposed at an angle relative to an adjacent grid holder, and wherein the angle is between about 25 degrees and 90 degrees.

7. The rotary drum filter of claim 1 further comprising multiple divider plates disposed in each of the multiple drainage sectors.

8. The rotary drum filter of claim 1 further comprising grids disposed around the outer surface of the drum, wherein the divider plate engages a bottom of the grid disposed around the outer surface of the drum.

9. The rotary drum filter of claim 1, further comprising grids disposed around the outer surface of the drum, wherein the divider plate extends from a bottom of the grid disposed around the outer surface of the drum.

10. A rotary drum filter comprising:
a drum shell having areas defining a plurality of drainage holes;
grid holders, wherein the grid holders extend longitudinally on an outer surface of a drum shell at arcuate intervals to define multiple arcuate drainage sectors including:
a first drainage sector, and
a second drainage sector disposed adjacent to the first drainage sector, wherein each of the drainage sectors have:
a first longitudinal end distally disposed from a second longitudinal end, and
a first lateral end distally disposed from a second lateral end, wherein the first drainage sector and the second drainage sector have drainage holes disposed near the first lateral end and the second lateral end; and
divider plates disposed on the outer surface of the drum shell and extending longitudinally and laterally within the first drainage sector and the second drainage sector, wherein an end of the drainage plates in the first drainage sector and the second drainage sector converges toward a middle grid holder disposed between the first drainage sector and the second drainage sector.

11. The rotary drum filter of claim 10, wherein the first drainage sector further comprises at least two divider plates and the second drainage sector further comprises at least two divider plates,
wherein a second divider plate of the at least two divider plates in each drainage sector is longitudinally distally disposed from a first divider plate in each drainage sector,
wherein a first end of the first divider plate in the first drainage sector is disposed closer to the first lateral end and the first longitudinal end of the first drainage sector and a second end of the first divider plate in the first drainage sector is disposed closer to the second lateral end and the second longitudinal end of the first drainage sector,
wherein a first end of the first divider plate in the second drainage sector is disposed closer to the second lateral end and the first longitudinal end of the second drainage sector and a second end of the first divider plate in the second drainage sector is disposed closer to the first lateral end and the second longitudinal end of the second drainage sector,
whereby the first divider plates in the first drainage sector and the second drainage sector define converging divider plates,
wherein a first end of the second divider plate in the first drainage sector is disposed closer to the second lateral end and the first longitudinal end of the first drainage sector and a second end of the second divider plate in the first drainage sector is disposed closer to the first lateral end and the second longitudinal end of the first drainage sector,
wherein a first end of the second divider plate in the second drainage sector is disposed closer to the first lateral end and the first longitudinal end of the second drainage sector and a second end of the second divider plate in the second drainage sector is disposed closer to the second lateral end and the second longitudinal end of the second drainage sector,
whereby the second divider plates in the first drainage sector and the second drainage sector define diverging divider plates.

12. The rotary drum filter of claim 11, wherein the first ends and second sends of the divider plates are disposed near drainage holes.

13. The rotary drum filter of claim 11, wherein the converging divider plates and the diverging divider plates define a hexagonal shape between the first drainage sector and the second drainage sector.

14. The rotary drum filter of claim 11, wherein the converging divider plates and the diverging divider plates define a shape selected from the group consisting of: an ovoid, a circular shape, a rhombic shape, an oblong shape, an octagonal shape, and other polygonal shapes configured to direct filtrate to the drainage holes.

15. The rotary drum filter of claim 11 further comprising at least three divider plates in each of the first drainage sector and the second drainage sector,
wherein a third divider plate of the at least three divider plates in each drainage sector is longitudinally distally disposed from the first divider plate and the second divider plate in each drainage sector,
wherein a first end of the third divider plate in the first drainage sector is disposed closer to the first lateral end and the first longitudinal end of the first drainage sector and a second end of the third divider plate in the first drainage sector is disposed closer to the second lateral end and the second longitudinal end of the first drainage sector,
wherein a first end of the third divider plate in the second drainage sector is disposed closer to the second lateral end and the first longitudinal end of the second drainage sector and a second end of the third divider plate in the second drainage sector is disposed closer to the first lateral end and the second longitudinal end of the second drainage sector,
whereby the third divider plates in the first drainage sector and the second drainage sector define converging divider plates.

16. The rotary drum filter of claim 10, wherein the gird holders have multiple slots disposed along a length of the grid holders.

17. A rotary filter drum comprising:
a drum shell having areas defining a plurality of drainage holes;
divider plates disposed on an outer surface of the drum shell and extending longitudinally and laterally along the drum shell along an upper section of an ascending drainage sector of the drum shell to a lower section of the ascending drainage sector of the drum shell, wherein the divider plate comprises a first end and a second end, and wherein the first end is disposed near a drainage hole and the second end is disposed near a drainage hole.

18. The rotary drum filter of claim 17 further comprising grid holders extending longitudinally on an outer surface of the drum shell and disposed at arcuate intervals to define multiple arcuate drainage sectors disposed around the drum shell.

19. The rotary drum filter of claim 18, wherein a grid holder of the multiple grid holders comprise multiple slots disposed along a length of the grid holder.

20. The rotary drum filter of claim 18, wherein a grid holder of the multiple grid holders is disposed above the outer drum surface.
